# EUROPEAN PATENT APPLICATION

(11) **EP 4 668 188 A1**
(43) Date of publication of application: **24.12.2025**
(21) Application number: 25182518.8
(22) Date of filing: 12.06.2025
(51) Int. Cl.: G06Q 20/20, G06Q 20/32

(54) **POS PAYMENT METHOD AND TERMINAL BASED ON VIRTUAL ROUTER REDUNDANCY PROTOCOL**

(30) Priority: 17.06.2024 CN 202410776019
(71) Applicant: FUJIAN WISBO DIGITAL TECHNOLOGY Co. Ltd., Xiamen Fujian 361000 (CN)
(72) Inventor: CHEN, Liquan, XIAMEN CITY, 361000 (CN)
(74) Representative: Dall'Olio, Christian

(57) **Abstract**

The present invention discloses a POS payment method and terminal based on a virtual router redundancy protocol. A constructed POS array network includes a plurality of POS terminals, and a routing component is preset in each of the POS terminals; at least one master POS terminal is determined from the plurality of POS terminals in the POS array network, and the remaining POS terminals are used as slave POS terminals; service requests are received by means of a virtual gateway, and the service requests are assigned to the at least one master POS terminal; and if the at least one master POS terminal is abnormal, one of the slave POS terminals is selected as a new master POS terminal, and the service requests are forwarded to the new master POS terminal by the routing component of the at least one abnormal master POS terminal.

## Description

### Technical Field

The present invention relates to the technical field of POS terminal payment, in particular to a POS payment method and terminal based on a virtual router redundancy protocol.

### Background Art

With the enrichment of payment transaction acquisition application scenarios, the market share of intelligent POS terminals has been increased year by year, and there is a great trend to replace traditional POS terminals. At present, mainstream intelligent POS terminals on the market mostly adopt the Android system, due to the diversity of functions and the complexity of the system, application jamming and system crash occur from time to time during use, in this case, users often can only restart an application or even restart the system, which greatly reduces the payment transaction acquisition efficiency and lowers the payment experience of customers. In addition, for the situation that a plurality of POS terminals exist in some payment places, the plurality of POS terminals work separately and cannot share resources, and each POS terminal uses an external network IP alone to be exposed to an external network, which cannot effectively use the bandwidth of the external network while increasing the security risk of each POS terminal.

### Summary of the Invention

The technical problem to be solved by the present invention is to provide a POS payment method and terminal based on a virtual router redundancy protocol, which can effectively increase the POS transaction acquisition efficiency.

In order to solve the above-mentioned technical problem, the present invention adopts one technical solution:
provided is a POS payment method based on a virtual router redundancy protocol, including the steps:
constructing a POS array network, wherein the POS array network includes a plurality of POS terminals, and a routing component is preset in each of the POS terminals;
determining at least one master POS terminal from the plurality of POS terminals in the POS array network, and using the remaining POS terminals as slave POS terminals;
receiving service requests, and assigning the service requests to the at least one master POS terminal; and
if the at least one master POS terminal is abnormal, selecting one of the slave POS terminals as a new master POS terminal, and forwarding the service requests to the new master POS terminal by the routing component of the at least one abnormal master POS terminal.

In order to solve the above-mentioned technical problem, the present invention adopts the other technical solution:
provided is a POS payment terminal based on a virtual router redundancy protocol, including a memory, a processor and a computer program stored in the memory and capable of running on the processor, wherein the processor, when executing the computer program, implements the following steps:
constructing a POS array network, wherein the POS array network includes a plurality of POS terminals, and a routing component is preset in each of the POS terminals;
determining at least one master POS terminal from the plurality of POS terminals in the POS array network, and using the remaining POS terminals as slave POS terminals;
receiving service requests, and assigning the service requests to the at least one master POS terminal; and
if the at least one master POS terminal is abnormal, selecting one of the slave POS terminals as a new master POS terminal, and forwarding the service requests to the new master POS terminal by the routing component of the at least one abnormal master POS terminal.

The present invention has the beneficial effects that: a constructed POS array network includes a plurality of POS terminals, and a routing component is preset in each of the POS terminals; at least one master POS terminal is determined from the plurality of POS terminals in the POS array network, and the remaining POS terminals are used as slave POS terminals; service requests are received, and the service requests are assigned to the at least one master POS terminal; and if the at least one master POS terminal is abnormal, one of the slave POS terminals is selected as a new master POS terminal, and the service requests are forwarded to the new master POS terminal by the routing component of the at least one abnormal master POS terminal. It is unnecessary to restart an application or a system even if the at least one master POS terminal is abnormal, for example, application jamming or system crash occurs, and the slave POS terminals can replace the at least one abnormal master POS terminal in time to make a response to the service requests, thereby effectively increasing the POS transaction acquisition efficiency, and then improving the payment experience of a customer.

### Brief description of the drawings

Fig. 1 is a step flow diagram of a POS payment method based on a virtual router redundancy protocol in an embodiment of the present invention;
Fig. 2 is a schematic structural diagram of a POS payment terminal based on a virtual router redundancy protocol in an embodiment of the present invention;
Fig. 3 is a schematic diagram of a POS array network in a POS payment method based on a virtual router redundancy protocol in an embodiment of the present invention; and
Fig. 4 is a schematic diagram of a process that a POS array network in a POS payment method based on a virtual router redundancy protocol provides service to the outside in an embodiment of the present invention.

### Detailed description of the Invention

In order to describe the technical contents and achieved objects and effects of the present invention in detail, following description is shown in conjunction with implementations and cooperation with the accompanying drawings.

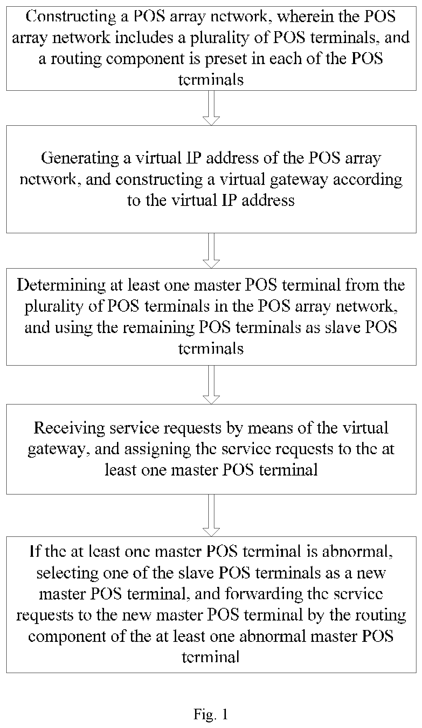

Refer to Fig. 1, provided is a POS payment method based on a virtual router redundancy protocol, including the steps:
a POS array network is constructed, wherein the POS array network includes a plurality of POS terminals, and a routing component is preset in each of the POS terminals;
a virtual IP address of the POS array network is generated, and a virtual gateway is constructed according to the virtual IP address;
at least one master POS terminal is determined from the plurality of POS terminals in the POS array network, and the remaining POS terminals are used as slave POS terminals;
service requests are received by means of the virtual gateway, and the service requests are assigned to the at least one master POS terminal; and
if the at least one master POS terminal is abnormal, one of the slave POS terminals is selected as a new master POS terminal, and the service requests are forwarded to the new master POS terminal by the routing component of the at least one abnormal master POS terminal.

It can be seen from the above-mentioned description that the present invention has the beneficial effects: a constructed POS array network includes a plurality of POS terminals, and a routing component is preset in each of the POS terminals; at least one master POS terminal is determined from the plurality of POS terminals in the POS array network, and the remaining POS terminals are used as slave POS terminals; service requests are received by means of a virtual gateway, and the service requests are assigned to the at least one master POS terminal; and if the at least one master POS terminal is abnormal, one of the slave POS terminals is selected as a new master POS terminal, and the service requests are forwarded to the new master POS terminal by the routing component of the at least one abnormal master POS terminal. It is unnecessary to restart an application or a system even if the at least one master POS terminal is abnormal, for example, application jamming or system crash occurs, and the slave POS terminals can replace the at least one abnormal master POS terminal in time to make a response to the service requests, thereby effectively increasing the POS transaction acquisition efficiency, and then improving the payment experience of a customer.

Further, before the step that at least one master POS terminal is determined from the plurality of POS terminals in the POS array network, and the remaining POS terminals are used as slave POS terminals, the POS payment method further includes:
a priority of each of the POS terminals is determined; and
a service mode is determined, wherein the service mode includes a master-slave mode or a load balancing mode;
the step that at least one master POS terminal is determined from the plurality of POS terminals in the POS array network, and the remaining POS terminals are used as slave POS terminals includes: the at least one master POS terminal is determined from the plurality of POS terminals in the POS array network according to the service mode and the priority, and the remaining POS terminals are used as the slave POS terminals.

It can be seen from the above-mentioned description that the priority and the service mode of each of the POS terminals are determined, and therefore, the at least one master POS terminal and the slave POS terminals are determined more effectively.

Further, the step that the at least one master POS terminal is determined from the plurality of POS terminals in the POS array network according to the service mode and the priority, and the remaining POS terminals are used as the slave POS terminals includes:
if the service mode is the master-slave mode, one of the POS terminals with the highest priority is selected as the at least one master POS terminal from the plurality of POS terminals in the POS array network, and the remaining POS terminals are used as the slave POS terminals.

It can be seen from the above-mentioned description that in the master-slave mode, only one master POS terminal exists, one of the POS terminals is selected as the new master POS terminal from the slave POS terminals only when the master POS terminal is abnormal, and therefore, an algorithm is low in complexity and convenient to implement.

Further, the step that the at least one master POS terminal is determined from the plurality of POS terminals in the POS array network according to the service mode and the priority, and the remaining POS terminals are used as the slave POS terminals includes:
if the service mode is the load balancing mode, the plurality of POS terminals in the POS array network are sorted from high to low according to the priority to obtain a plurality of sorted POS terminals;
a plurality of master POS terminals are selected from the plurality of sorted POS terminals in order, and weights are assigned to the plurality of master POS terminals; and
the remaining POS terminals in the plurality of sorted POS terminals are used as the slave POS terminals.

It can be seen from the above-mentioned description that in the load balancing mode, the plurality of master POS terminals can exist at the same time, the plurality of master POS terminals share a load, and therefore, the POS transaction acquisition efficiency can be further increased.

Further, the step that the service requests are assigned to the at least one master POS terminal includes:
the service requests are assigned to the plurality of master POS terminals according to the weights.
It can be seen from the above-mentioned description that the service requests are assigned according to the weights, which achieves load balancing, and guarantees the POS transaction acquisition efficiency.

Further, before the step that the at least one master POS terminal is abnormal, one of the slave POS terminals is selected as a new master POS terminal, the POS payment method further includes:
a POS service list is generated for each of the routing components, wherein the POS service list includes virtual MAC (Medium Access Control) addresses of the at least one master POS terminal and the slave POS terminals and health states corresponding to the virtual MAC addresses;
a virtual router redundancy protocol broadcast packet is regularly sent to other POS terminals by means of the routing component of the at least one master POS terminal; and
the virtual router redundancy protocol broadcast packet is received by means of routing components of the slave POS terminals, waiting for a preset time is performed, then, it is determined whether a new virtual router redundancy protocol broadcast packet sent by the at least one master POS terminal is received, if not, it is determined that the health state of the at least one master POS terminal is abnormal, and the POS service list is updated by means of the routing components of the slave POS terminals.

It can be seen from the above-mentioned description that the health state of the at least one master POS terminal is checked by means of the virtual router redundancy protocol broadcast packet, which is simple and reliable.

Further, the step that one of the slave POS terminals is selected as a new master POS terminal includes:
a slave POS terminal with the highest priority is selected as the new master POS terminal from all the slave POS terminals.

It can be seen from the above-mentioned description that it is ensured that the slave POS terminal with the highest priority is used as the new master POS terminal, and more efficient POS transaction acquisition is achieved.

Further, the step that a slave POS terminal with the highest priority is selected as the new master POS terminal includes:
a slave POS terminal with the highest priority is selected; and
if a plurality of slave POS terminals with the highest priority exist, a slave POS terminal earlier accessing to the POS array network in the plurality of slave POS terminals with the highest priority is used as the new master POS terminal.

It can be seen from the above-mentioned description that when the plurality of slave POS terminals with the highest priority exist, the slave POS terminal earlier accessing to the POS array network in the plurality of slave POS terminals with the highest priority is used as the new master POS terminal, which ensures that the slave POS terminal can replace the at least one abnormal master POS terminal in time.

Further, the step that a priority of each of the POS terminals is determined includes:
the priority is determined according to a hardware performance of each of the POS terminals, a network bandwidth or a chronological order of accessing to the POS array network.

It can be seen from the above-mentioned description that the priority is determined according to the hardware performance of each of the POS terminals, the network bandwidth or the chronological order of accessing to the POS array network, which ensures that a POS terminal with a better performance can replace the at least one abnormal master POS terminal, thereby ensuring that the POS transaction acquisition is completely smoothly and reliably.

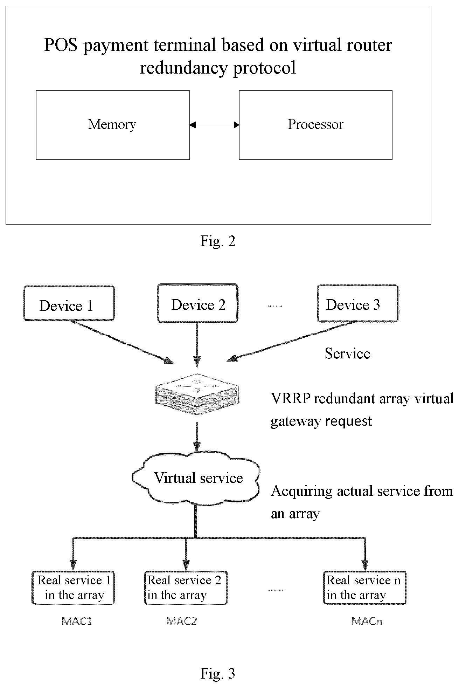

Refer to Fig. 2, the other embodiment of the present invention provides a POS payment terminal based on a virtual router redundancy protocol, including a memory, a processor and a computer program stored in the memory and capable of running on the processor, wherein the processor, when executing the computer program, implements each step of the above-mentioned POS payment method based on a virtual router redundancy protocol.

The above-mentioned POS payment method and terminal based on a virtual router redundancy protocol in the present invention are applicable to a transaction acquisition scenario, for example, transaction acquisition is completed by means of a POS terminal or a cash register, which will be described with a specific implementation:
refer to Fig. 1, Fig. 3 and Fig. 4, embodiment 1 of the present invention is described as:
provided is a POS payment method based on a virtual router redundancy protocol, including the steps:
S1, a POS array network is constructed, wherein the POS array network includes a plurality of POS terminals, and a routing component is preset in each of the POS terminals.

The routing component achieves a routing function of a virtual router redundancy protocol (VRRP). If each POS terminal exits from the POS array network, the POS terminal is still an independent POS payment subsystem.

S2, a virtual IP address of the POS array network is generated, and a virtual gateway is constructed according to the virtual IP address.

As shown in Fig. 3, by generating the virtual IP address for the POS array network, all requests that devices access to service of the POS terminals are sent to the virtual IP address firstly, and then, the requests are assigned to the POS terminals by means of the virtual gateway composed of the virtual IP address, which effectively uses the bandwidth of an external network while reducing the security risk of each POS terminal.

S3, a priority of each of the POS terminals is determined.

Specifically, the priority is determined according to a hardware performance of each of the POS terminals, a network bandwidth or a chronological order of accessing to the POS array network. S4, a service mode is determined, wherein the service mode includes a master-slave mode or a load balancing mode.

S5, at least one master POS terminal is determined from the plurality of POS terminals in the POS array network, and the remaining POS terminals are used as slave POS terminals.

Specifically, the at least one master POS terminal is determined from the plurality of POS terminals in the POS array network according to the service mode and the priority, and the remaining POS terminals are used as the slave POS terminals.

In an optional implementation, if the service mode is the master-slave mode, one of the POS terminals with the highest priority is selected as the at least one master POS terminal from the plurality of POS terminals in the POS array network, and the remaining POS terminals are used as the slave POS terminals.

In an optional implementation, if the service mode is the load balancing mode, the plurality of POS terminals in the POS array network are sorted from high to low according to the priority to obtain a plurality of sorted POS terminals; a plurality of master POS terminals are selected from the plurality of sorted POS terminals in order, and weights are assigned to the plurality of master POS terminals; and the remaining POS terminals in the plurality of sorted POS terminals are used as the slave POS terminals.

Specifically, the specific number of the selected master POS terminals can be flexibly set according to an actual situation.

S6, service requests are received by means of the virtual gateway, and the service requests are assigned to the at least one master POS terminal.

The service requests include payment service requests and other service requests.

Specifically, the service requests are received by means of the virtual gateway, if there is only one master POS terminal, the service requests are assigned to the master POS terminal, and if there are a plurality of master POS terminals, the service requests are assigned to the plurality of master POS terminals according to the weights.

For example, the received service requests are 100 payment service requests, if there is only one master POS terminal, the 100 payment service requests are all assigned to the master POS terminal; if there are a plurality of master POS terminals, it is assumed that the weight of master POS terminal 1 is 60 and the weight of master POS terminal 2 is 40, 60% (60) of the 100 payment service requests are assigned to the master POS terminal 1, and 40% (40) thereof are assigned to the master POS terminal 2; and it is assumed that the weights of the master POS terminals 1 and 2 are both 50, the 100 payment service requests are equally assigned to the master POS terminals 1 and 2.

S7, if the at least one master POS terminal is abnormal, one of the slave POS terminals is selected as a new master POS terminal, and the service requests are forwarded to the new master POS terminal by the routing component of the at least one abnormal master POS terminal.

The step that one of the slave POS terminals is selected as a new master POS terminal includes:
a slave POS terminal with the highest priority is used as the new master POS terminal from all the slave POS terminals.

Specifically, a slave POS terminal with the highest priority is selected from all the slave POS terminals; and if a plurality of slave POS terminals with the highest priority exist, a slave POS terminal earlier accessing to the POS array network in the plurality of slave POS terminals with the highest priority is used as the new master POS terminal.

In an optional implementation, before S7, the POS payment method further includes:
a POS service list is generated for each of the routing components, wherein the POS service list includes virtual MAC addresses of the at least one master POS terminal and the slave POS terminals and health states corresponding to the virtual MAC addresses; a virtual router redundancy protocol broadcast packet is regularly sent to other POS terminals by means of the routing component of the at least one master POS terminal; and the virtual router redundancy protocol broadcast packet is received by means of routing components of the slave POS terminals, waiting for a preset time is performed, then, it is determined whether a new virtual router redundancy protocol broadcast packet sent by the at least one master POS terminal is received, if not, it is determined that the health state of the at least one master POS terminal is abnormal, and the POS service list is updated by means of the routing components of the slave POS terminals.

The virtual MAC addresses correspond to the POS terminals one to one. The virtual router redundancy protocol broadcast packet (i.e., a heartbeat packet) includes virtual router redundancy protocol version information, a virtual router ID, a priority thereof, etc. The slave POS terminals record, by means of a timer, the sending time of the virtual router redundancy protocol broadcast packet received last time and sent by the at least one master POS terminal, so that it is determined, after the preset time, whether the new virtual router redundancy protocol broadcast packet is received. The preset time can be flexibly set according to an actual situation. In some implementations, the preset time is interval time of three heartbeats.

After the slave POS terminals determine that the at least one master POS terminal is abnormal, one of the slave POS terminals can be selected as the new master POS terminal, thereby ensuring that the POS transaction acquisition is smoothly performed.

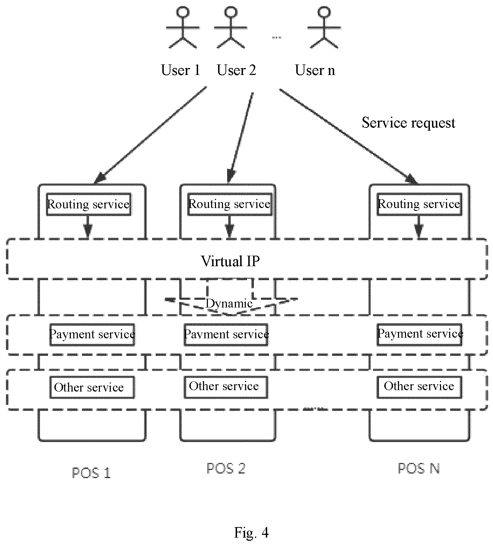

As shown in Fig. 4, payment service of each POS terminal is integrated to a payment service cluster in a POS cluster, the payment service is outwards provided uniformly by means of the virtual gateway generated according to a virtual router redundancy protocol, when the payment service is initiated, a task is assigned to a certain POS terminal capable of providing reliable service in the load balancing or master-slave mode. Thus, the service requests can be sent to other POS terminals in the cluster in real time to complete the service even if a certain POS terminal is failed during service, meanwhile, the different POS terminals can also share resources, and then, the POS transaction acquisition efficiency is effectively increased.

Refer to Fig. 2, embodiment 2 of the present invention is described as that:
provided is a POS payment terminal based on a virtual router redundancy protocol, including a memory, a processor and a computer program stored in the memory and capable of running on the processor, wherein the processor, when executing the computer program, implements each step of the POS payment method based on a virtual router redundancy protocol in embodiment 1.

In conclusion, according to the POS payment method and terminal based on a virtual router redundancy protocol provided by the present invention, a constructed POS array network includes a plurality of POS terminals, and a routing component is preset in each of the POS terminals; at least one master POS terminal is determined from the plurality of POS terminals in the POS array network, and the remaining POS terminals are used as slave POS terminals; service requests are received by means of a virtual gateway, and the service requests are assigned to the at least one master POS terminal; and if the at least one master POS terminal is abnormal, one of the slave POS terminals is selected as a new master POS terminal, and the service requests are forwarded to the new master POS terminal by the routing component of the at least one abnormal master POS terminal. It is unnecessary to restart an application or a system even if the at least one master POS terminal is abnormal, for example, application jamming or system crash occurs, and the slave POS terminals can replace the at least one abnormal master POS terminal in time to make a response to the service requests, thereby effectively increasing the POS transaction acquisition efficiency, and then improving the payment experience of a customer; in addition, a master-slave model and a load balancing mode are supported, in the master-slave mode, only one master POS terminal exists, one of the POS terminals is selected as the new master POS terminal from the slave POS terminals only when the master POS terminal is abnormal, and therefore, an algorithm is low in complexity and convenient to implement; and in the load balancing mode, the plurality of master POS terminals can exist at the same time, the plurality of master POS terminals share a load, and therefore, the POS transaction acquisition efficiency can be further increased.

Above descriptions are only embodiments of the present invention, and are not intended to hence limit the patent scope of the present invention. Any equivalent transformations made according to the contents of the description and the accompanying drawings of the present invention are directly or indirectly applied to the related art and also fall within the patent protection scope of the present invention in a similar way.

## Claims

1. A POS (Point of Sale) payment method based on a virtual router redundancy protocol, **characterized by** comprising the steps:
constructing a POS array network, wherein the POS array network comprises a plurality of POS terminals, and a routing component is preset in each of the POS terminals;
determining at least one master POS terminal from the plurality of POS terminals in the POS array network, and using the remaining POS terminals as slave POS terminals;
receiving service requests, and assigning the service requests to the at least one master POS terminal; and
if the at least one master POS terminal is abnormal, selecting one of the slave POS terminals as a new master POS terminal, and forwarding the service requests to the new master POS terminal by the routing component of the at least one abnormal master POS terminal.

2. The POS payment method based on a virtual router redundancy protocol according to claim 1, **characterized in that** before the determining at least one master POS terminal from the plurality of POS terminals in the POS array network, and using the remaining POS terminals as slave POS terminals, the POS payment method further comprises:
determining a priority of each of the POS terminals; and
determining a service mode, wherein the service mode comprises a master-slave mode or a load balancing mode;
the determining at least one master POS terminal from the plurality of POS terminals in the POS array network, and using the remaining POS terminals as slave POS terminals comprises:
determining the at least one master POS terminal from the plurality of POS terminals in the POS array network according to the service mode and the priority, and using the remaining POS terminals as the slave POS terminals.

3. The POS payment method based on a virtual router redundancy protocol according to claim 2, **characterized in that** the determining the at least one master POS terminal from the plurality of POS terminals in the POS array network according to the service mode and the priority, and using the remaining POS terminals as the slave POS terminals comprises:
if the service mode is the master-slave mode, selecting one of the POS terminals with the highest priority as the at least one master POS terminal from the plurality of POS terminals in the POS array network, and using the remaining POS terminals as the slave POS terminals.

4. The POS payment method based on a virtual router redundancy protocol according to claim 2, **characterized in that** the determining the at least one master POS terminal from the plurality of POS terminals in the POS array network according to the service mode and the priority, and using the remaining POS terminals as the slave POS terminals comprises:
if the service mode is the load balancing mode, sorting the plurality of POS terminals in the POS array network from high to low according to the priority to obtain a plurality of sorted POS terminals;
selecting a plurality of master POS terminals from the plurality of sorted POS terminals in order; and
using the remaining POS terminals in the plurality of sorted POS terminals as the slave POS terminals.

5. The POS payment method based on a virtual router redundancy protocol according to claim 4, **characterized in that** assigning weights to the plurality of master POS terminals after selecting a plurality of master POS terminals from the plurality of sorted POS terminals in order;
the assigning the service requests to the at least one master POS terminal comprises:
assigning the service requests to the plurality of master POS terminals according to the weights.

6. The POS payment method based on a virtual router redundancy protocol according to claim 1, **characterized in that** before the if the at least one master POS terminal is abnormal, selecting one of the slave POS terminals as a new master POS terminal, the POS payment method further comprises:
generating a POS service list for each of the routing components, wherein the POS service list comprises virtual MAC (Medium Access Control) addresses of the at least one master POS terminal and the slave POS terminals and health states corresponding to the virtual MAC addresses;
regularly sending a virtual router redundancy protocol broadcast packet to other POS terminals by means of the routing component of the at least one master POS terminal; and
receiving the virtual router redundancy protocol broadcast packet by means of routing components of the slave POS terminals, waiting for a preset time, then, determining whether a new virtual router redundancy protocol broadcast packet sent by the at least one master POS terminal is received, if not, determining that the health state of the at least one master POS terminal is abnormal, and updating the POS service list by means of the routing components of the slave POS terminals.

7. The POS payment method based on a virtual router redundancy protocol according to claim 2, **characterized in that** the selecting one of the slave POS terminals as a new master POS terminal comprises:
selecting a slave POS terminal with the highest priority as the new master POS terminal from all the slave POS terminals.

8. The POS payment method based on a virtual router redundancy protocol according to claim 7, **characterized in that** the selecting a slave POS terminal with the highest priority as the new master POS terminal from all the slave POS terminals comprises:
selecting a slave POS terminal with the highest priority from all the slave POS terminals; and
if a plurality of slave POS terminals with the highest priority exist, using a slave POS terminal earlier accessing to the POS array network in the plurality of slave POS terminals with the highest priority as the new master POS terminal.

9. The POS payment method based on a virtual router redundancy protocol according to claim 2, **characterized in that** the determining a priority of each of the POS terminals comprises:
determining the priority according to a hardware performance of each of the POS terminals, a network bandwidth or a chronological order of accessing to the POS array network.

10. The POS payment method based on a virtual router redundancy protocol according to claim 1, **characterized in that** generating a virtual IP address of the POS array network, and constructing a virtual gateway according to the virtual IP address;
receiving service requests by means of the virtual gateway.

11. A POS payment terminal based on a virtual router redundancy protocol, comprising a memory, a processor and a computer program stored in the memory and capable of running on the processor, **characterized in that** the processor, when executing the computer program, implements each step of the POS payment method based on a virtual router redundancy protocol according to any one of claims 1 to 9.
